(19) **Europäisches Patentamt / European Patent Office / Office européen des brevets**

(11) **EP 1 845 486 A1**

(12) **EUROPEAN PATENT APPLICATION**

(43) Date of publication:
**17.10.2007 Bulletin 2007/42**

(51) Int Cl.:
*G06Q 10/00* (2006.01)    *G06Q 30/00* (2006.01)

(21) Application number: **07006217.9**

(22) Date of filing: **13.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **18.03.2006 GB 0605451**
**07.09.2006 GB 0617685**

(71) Applicant: **QM Group Limited**
**Milton Keynes MK19 7HJ (GB)**

(72) Inventor: **Green, Terence Ronald**
**Stratford Upon Avon**
**Warwickshire CV37 7LZ (GB)**

(74) Representative: **Raynor, Simon Mark**
**Urquhart-Dykes & Lord LLP**
**Midsummer House**
**413 Midsummer Boulevard**
**Central Milton Keynes MK9 3BN (GB)**

(54) **Recording customer satisfaction with service staff performance**

(57)    A method and terminal for assessing customer service satisfaction are disclosed. The method comprises creating a display (8) that includes a graphical representation of the identity of a server, such as the server's name (16) and photograph (14). The display (8) also includes a graphical representation of levels of performance satisfaction (10,12). These may be represented as text, icons or both. User input is then received that indicates one of the levels of performance satisfaction. The user input is interpreted, and the indicated level of performance satisfaction and the identity of the server are recorded in a database.

*Fig. 1*

EP 1 845 486 A1

## Description

This invention relates to recording customer satisfaction with staff performance in a situation where a member of staff (who will be referred to as a "server") provides a service to a customer.

Reliable monitoring of serving staff performance and customer satisfaction is a problem faced by many service-based businesses. Many customers find it difficult to report their impressions of service that they have received from a server accurately, especially where the service has not met their expectations. A further source of inaccurate reporting arises because a customer may not be able to correctly identify the individual staff member who served them. It is also difficult for a business to keep accurate, consistent and timely information that will enable staff performance to be monitored effectively. This is particularly disadvantageous for businesses that use automated systems to assign servers to a particular task, since such systems cannot operate effectively unless they can access accurate data that reflects serving staff performance.

An aim of this invention is to provide a system whereby accurate feedback from customers reflecting their satisfaction with servers can be obtained and made available for further analysis and processing.

From a first aspect, this invention provides a method for assessing customer service satisfaction comprising creating a display that includes a graphical representation of the identity of a server and a graphical representation of levels of performance satisfaction, receiving user input that indicates one of the levels of performance satisfaction, and recording the indicated level of performance satisfaction and the identity of the server in a database.

This provides a reliable and straightforward route through which information relating to the performance of servers can be stored for use in selection and assessment of serving staff. This may be useful in a system for matching servers to customers, for example as described in WO05/103970A, the content of which is included by reference herein.

The graphical representation of the identity of a server may include a photographic representation of the server. A customer will typically recognise the appearance of a staff member, even if they have no other means of identifying the individual. Alternatively or additionally, the graphical representation of the identity of a server includes a textual representation of the individual's name. This can be used by a customer as a confirmation that the correct member of staff has been identified.

The graphical representation of levels of customer satisfaction may include figurative icons. These can be quickly recognised by a customer. Alternatively or additionally, the graphical representation of levels of customer satisfaction may include a textual description, which can serve as a confirmation of the meaning of the figurative icons.

In the method, an identifier of a server may be used to retrieve data relating to the server from a database, including, for example, a photograph of the individual. The identifier of the server may be derived from data that identifies a transaction, such as an order number.

Advantageously, the level of performance satisfaction recorded in the database is used to determine a suitability value for the server, which may be used to assess the suitability of the server for responding to future service requests.

Preferably, the method includes receiving a service request from a customer, retrieving from the database a suitability value for each of a plurality of servers, and selecting a server on the basis of the obtained suitability values.

The method may include receiving a service request that includes data identifying a requested service grade, retrieving from a database a set of selection values for each of a plurality of servers and a set of weighting values, wherein the set of weighting values is selected from a plurality of sets on the basis of the requested service grade, obtaining a set of weighted selection values for each server by applying the set of weighting values to each set of selection values, obtaining from the set of weighted selection values a suitability value for each server, and selecting a server on the basis of the obtained suitability values.

The process allows servers to be matched to customers according to their needs, as specified in the service request. This improves the customer experience while at the same time ensuring for the service provider the most effective and efficient use of staff resources.

Advantageously, the service request includes data identifying a product, and the step of retrieving a set of selection values includes selecting a set of selection values on the basis of the identified product, This allows the server to be selected at least partially on the basis of their product knowledge, so that where the customer requires technical advice in relation to a product, a server with a suitable degree of product knowledge is allocated to serve the customer. On the other hand, if the customer does not require detailed product advice, the server may be selected from a wider range of available servers, including those with a lower level of product knowledge,

Advantageously, the step of obtaining a set of weighted selection values for each server includes multiplying each selection value by a corresponding weighting value.

Advantageously, the step of obtaining a suitability value for each server includes summing the weighted selection values.

The method may include retrieving from a database a set of adjustment values, obtaining a set of adjusted selection values for each server by applying the set of adjustment values to each set of weighted selection values, and obtaining from the set of adjusted selection values a suitability value for each server. This allows the allocation process to be adjusted according to particular circumstances, to ensure efficient operation.

Advantageously, the step of obtaining a set of adjusted selection values for each server includes multiplying each weighted selection value by a corresponding adjustment value, The step of obtaining a suitability value for each server preferably includes summing the adjusted selection values.

Advantageously, the server with the highest suitability value is selected.

At least one of the selection values may relate to the availability of the servers, and/or to the server's product knowledge, and/or to a server skill.

Preferably, there is associated with each server a plurality of product-related selection values that relate to different products or product groups, one or more of those product-related selection values being selected on the basis of product information contained in the service request.

The method may include checking a qualification rating for each server and excluding from selection any server without a suitable qualification rating. This ensures that where for example there are legal requirements for advice to be given only by qualified personnel, the selection is made only from those servers who have the necessary qualifications.

The method may include transmitting the service request to the selected server, and preferably checking for acceptance by the selected server of the transmitted service request. The method may include selecting and transmitting the service request to another server if the originally selected server does not accept the transmitted service request. Preferably, the customer is notified when a service request is requested.

The method may include notifying the customer in the event that no suitable server accepts the service request, and offering the customer the option of either waiting or cancelling the service request. The method may include entering the service request into a queue in the event that no suitable server accepts the service request, and transmitting the service request to a suitable server when one becomes available.

The method may therefore use one or more strategies for dealing with the situation in which the first selected server is unable to accept the service request. The service request may then be passed to another suitable server, or the customer may be offered the option of waiting in a queue. The customer is kept informed so as to avoid frustration.

From a second aspect, this invention provides a terminal for recording customer service satisfaction comprising a display and an input device, the terminal being operative to display a graphical representation of the identity of a server and a graphical representation of levels of customer satisfaction with that server, and to receive through the input device an indication of a customer's satisfaction with the service and to record the customer's input in a database.

The input device of a terminal embodying the invention may include one or more pushbuttons. Alternatively or additionally, the input device may include a touch screen,

A terminal embodying the invention is typically operative to transfer data received from a customer to a database. It may be further operative to receive an identifier of an individual, and retrieve data relating to the individual from a database, including, for example, a photograph of the individual, The identifier of an individual may be derived from data that identifies a transaction, such as an order number. The invention may be embodied by a point-of-sale terminal or a till that has suitably programmed software.

According to a further aspect of the invention there is provided a customer service system including a terminal according to any one of the preceding statements of invention, a database for recording data relating to one or more servers, said data including the indicated levels of customer satisfaction, and a controller for controlling the transfer of data to and from the terminal and the database.

Preferably, the controller is constructed and arranged to determine from the indicated levels of customer satisfaction a suitability value for each server, which may be used to assess the suitability of the server for responding to future service requests, and to record the suitability values in the database.

The system preferably includes means for receiving a service request, the controller being constructed and arranged such that upon receiving a service request the controller retrieves from the database a suitability value for each server and selects a server for responding to the service request on the basis of the suitability values.

According to one preferred embodiment, the customer service system includes a customer service point for receiving a service request that includes data identifying a requested service grade, a controller for selecting a server on the basis of the server's suitability for responding to the service request, and a database containing a set of selection values for each of a plurality of servers and plural sets of weighting values, wherein the controller is constructed and arranged to retrieve from the database a set of selection values for each server and a set of weighting values that is selected on the basis of the requested service grade, to obtain a set of weighted selection values for each server by applying the set of weighting values to each set of selection values, to obtain from the set of weighted selection values a suitability value for each server, and to select a server on the basis of the obtained suitability values.

Advantageously, the system includes a communications system that allows the controller to communicate with the servers. Advantageously, the communications system is constructed and arranged to enable two-way communication between the central controller and the servers.

The communications system is preferably arranged to enable the servers to accept or reject a service request. The controller is preferably constructed and arranged to check for acceptance by the selected server of the transmitted service request, and preferably to select and transmit the service request to another server if the originally selected server does not accept the transmitted service request.

The controller may be constructed and arranged to notify the customer when a service request is requested, and preferably to notify the customer in the event that no suitable server accepts the service request, and offer the customer the option of either waiting or cancelling the service request.

Advantageously, the controller is arranged to enter the service request into a queue in the event that no suitable server accepts the service request, and transmit the service request to a suitable server when one becomes available.

The customer service point may include display means for displaying information regarding selected products. The system may include a plurality of customer service points.

The customer service system may include a server unit that is constructed and arranged to enable servers to log in and out of the system.

Certain embodiments of the invention will now be described in detail, by way of example, and with reference to the accompanying drawings, in which:

Figure 1 is a screenshot of a terminal being an embodiment of the invention;

Figure 2 is a flowchart that describes the operation of the embodiment of Figure 1;

Figure 3 is a schematic diagram of a customer service system being an embodiment of the invention;

Figure 4 illustrates a customer service point forming part of the system;

Figure 5 illustrates a communicator, forming part of the system;

Figure 6 is an exemplary table illustrating the selection characterisation data for a server;

Figure 7 is an exemplary table illustrating weighting values for different service grades;

Figure 8 is a table illustrating a method of calculating a suitable rating;

Figure 9 is a flow diagram illustrating a method of ranking servers according to their suitability for responding to a customer service request;

Figure 10 is a flow diagram illustrating operation of the customer service system; and

Figure 11 is a flow diagram illustrating operation of a sub-routine for handling waiting customers.

With reference to the drawings, an embodiment of the invention is implemented in hardware using a terminal 6 that is close to or may be part of a till or other sales terminal that will be used by a customer at the end of their interaction with service staff. The terminal 6 comprises a display device and a user input device. These may be combined in a touch-screen display 8, The system may be implemented in the software of an existing point-of-sale system or it may be a separate autonomous system, Typically, the system will be installed in an establishment that is heavily service based, such as a restaurant or a retail shop in which shop assistants play an active role as servers. The terminal can interact with a staff database system, in a manner that will be described below.

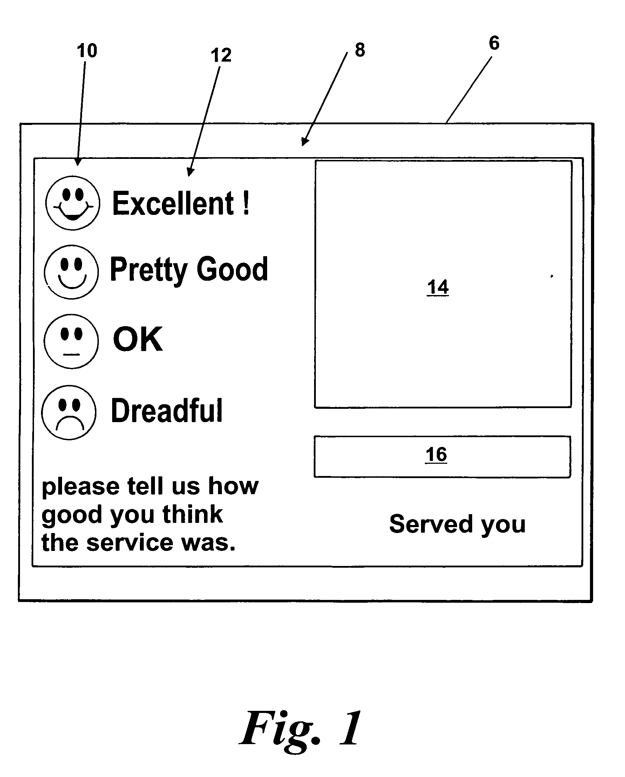

A typical display 8 that is generated by software embodying the invention is shown in Figure 1. The display includes a plurality of icons 10, each having an associated description text 12, that represent a customer's perceived satisfaction with the service they have received from a server. In this example, the icons are highly stylised representations of a face, but in practice they will be chosen to be appropriate to the nature and circumstances of the service being offered. The textual description includes ratings such as "Excellent", "Pretty Good", "OK" and "Dreadful".

To ensure that the customer provides feedback on the correct individual server, the display further includes a region 14 within which a photograph of the server can be displayed, and a region 16 in which the server's name can be displayed.

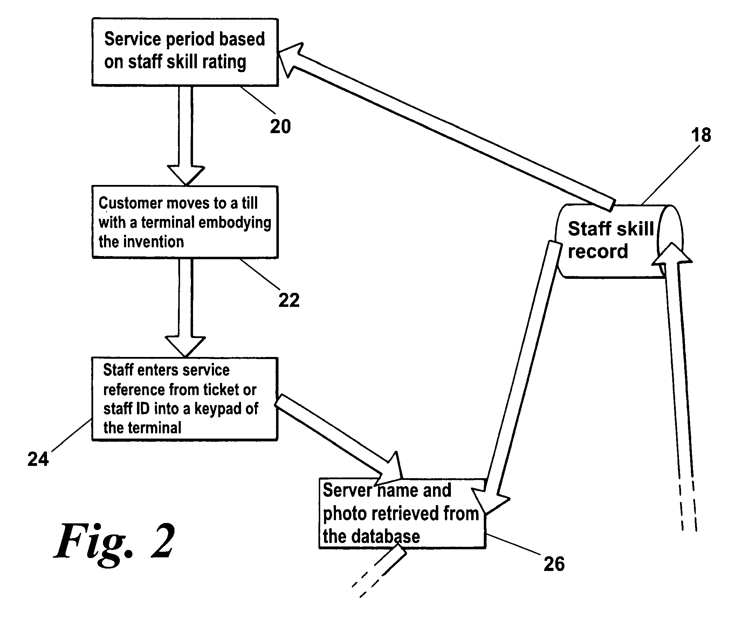

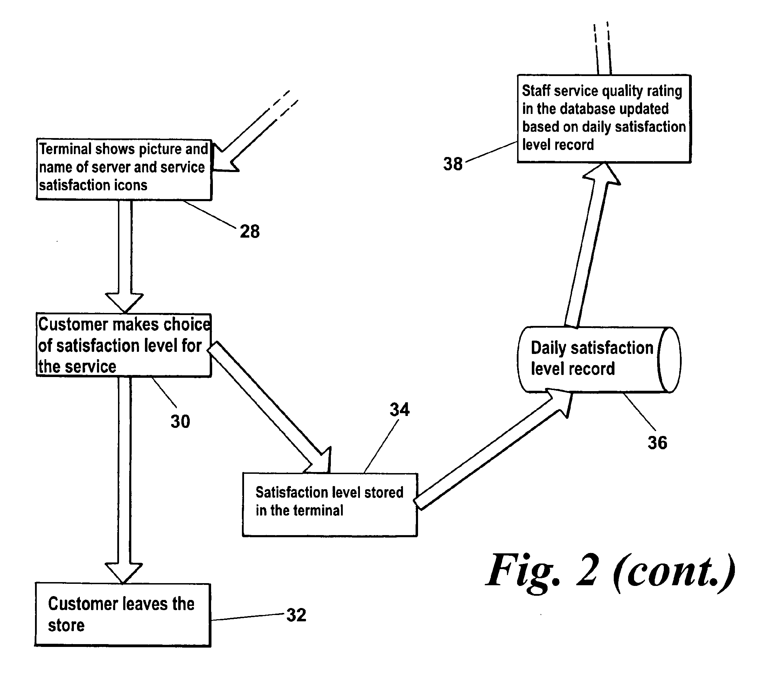

Operation of the embodiment will now be described with reference to Figure 2.

Operation starts with the completion of an interaction between a customer and a server (Step 20). The server allocated to the customer may have been selected automatically by reference to a database system 18, which uses algorithms to match stored characteristics of individual staff members to the service that they are to provide to the customer, Such a system may for example be of the type described in WO05/103970A.

The customer then proceeds to a till where the customer will make payment for the product or service purchased (Step 22). At the till, the server or another staff member enters a reference to identify the transaction that is being completed (Step 24) using, for example, an input keypad. This reference may be an identifier of a particular transaction taken from a printed ticket or an identifier of the staff member.

The terminal then contacts the database system 18, which contains data relating to the knowledge and skill levels of the individual servers. The terminal requests from the database the name and a photograph of the server that is associated with the reference (Step 26). The display shown in Figure 1 is then presented to the customer, with the appropriate server name and photograph displayed (Step 28). The customer then uses the input device to indicate their satisfaction with the service they received (Step 30). The customer's interaction with the system is then complete and he or she may leave the store (Step 32).

The terminal now converts the satisfaction rating indicated by the customer into a numerical value. The numeric values may for example be 3 for "Excellent", 2 for "Pretty good", 1 for "OK" and -1 for "Dreadful". In this way, positive service generates positive numbers and negative service generates negative numbers. These values are summed or averaged over a period such as a day to provide a service rating for each staff member. Long-term staff performance can be calculated as a sum or average of successive daily values.

The satisfaction level values are recorded within a memory of the terminal (Step 34). This data is typically accumulated in a batch 36 for each server, for example over a period of a working day or a shift. The batch of data recorded by the terminal for each server is then used to update the staff database 18 (Step 38).

Within the database 18, the data retrieved from the terminal is processed. The data relating to customer satisfaction can be analysed to update the skills rating of the individual server. When a server has a consistently high satisfaction rating for a particular type of service, their skills rating will be updated to increase the preference with which they are assigned to a customer requiring that type of service. This may also be used to recommend a server for promotion or bonus payments. Likewise, when a server has a consistently low satisfaction rating for a particular type of service, their skills rating will be updated to decrease the preference with which they are assigned to a customer requiring that type of service. This may also issue a warning to managers to make a suitable intervention, for example by recommending that the individual server undertakes retraitxittg.

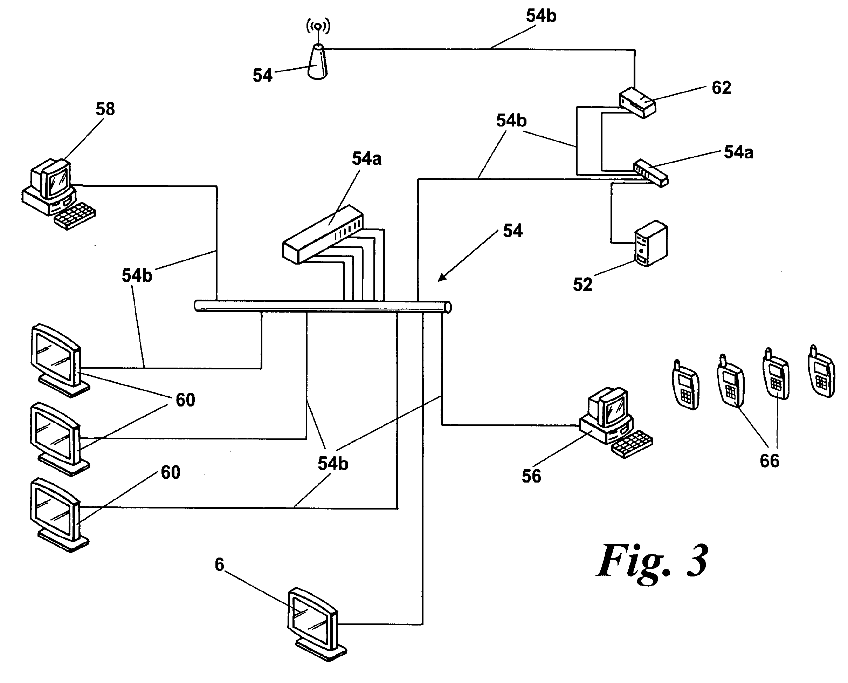

The terminal 6 may for example be part of a customer service system, the physical architecture of which is shown in Figure 3. This example is of a system that is suitable for use in a retail store. This may for example be a large electrical goods retailer.

The customer service system includes a system controller computer 52 that is connected via an ethernet network 54 including ethernet switches 54A and cables 54B to a staff access computer 56, a supervisor computer 58 and a plurality of customer service points 60 and one or more terminals 6. The system controller computer 52 is also connected via a wireless communications device 62 and a transponder 64 to a plurality of two-way wireless communications devices ("communicators") 66.

The system controller computer 52 will normally be placed in a secure back room to which the public does not have access. It includes a database stored in memory that contains data relating to the servers and product information. The system controller 52 contains the software and processors that control operation of the customer service system,

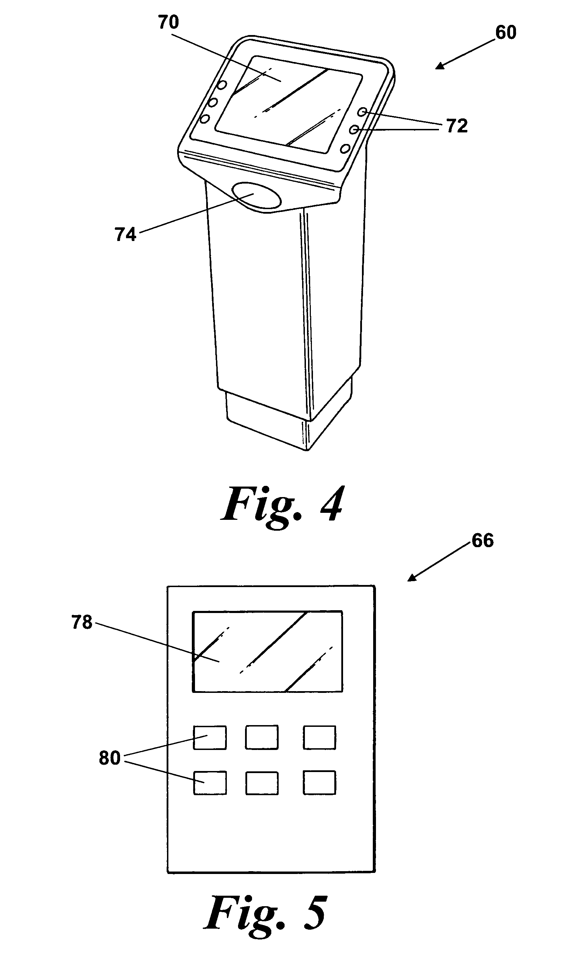

The customer service points 60 are distributed around the public part of the store so that they can be used by customers. An example of a customer service point 60 is shown in Figure 4. The customer service point 60 includes a screen 70 for displaying information and messages, a plurality of buttons 72 on either side of the screen 70 for making selections and sending messages to the system, and a ticket printing machine 74. Preferably, at least one customer service point 60 is provided in each department of the store, so that it can be used for obtaining information about the specific types of product available in that department. For example, in an electrical retailer, the product groups may include cameras, camcorders, hi-fi equipment, computers and so on. One or more terminals 6 may be located near a checkout or exit of the retail establishment. The customer service points 60 and the terminals 6 can communicate via the network 54 with the system controller 52, allowing information and data to be transferred to and from the system controller.

The staff access computer 56 is located in a staff area where it can be accessed by the servers but not by the customers, It is connected via the network 54 to the system controller 52, allowing data and information to be exchanged. The staff access computer 56 allows each server to log on and off the system and to register details of the communicator 66 they are using.

The supervisor computer 58 will usually be located in the public part of the store, but will be used only by the staff supervisor. A supervisor computer 58 is again connected via the network 54 to the system controller 52, allowing for the exchange of data, information and commands. A supervisor can use the supervisor computer 58 to modify operation of the system and to send messages to the servers via the wireless communicators 66. The supervisor can also monitor operation of the system and can make any adjustments necessary to ensure smooth and efficient operation.

The two-way communicators 66 may for example be wireless pager, handheld computers, PDAs (personal digital assistants), or any other suitable wireless device. They allow for two-way communication between the system and the servers, allowing data and messages to be transmitted back and forth via the transponder 64 and the communications system 62. The communicators 66 allow the servers to receive messages from the system and reply as required.

An example of a suitable communicator 66 is shown in Figure 5. It includes a screen 78 and a number of control buttons 80. The screen 78 can be used for displaying messages and menus of commands, which the server can select and transmit in conventional fashion using the controls 80.

Basic operation of the system is as follows.

Upon arriving for work, each server takes a communicator 66 and logs onto the system using the staff access computer 56. The controller 52 records the fact that the server has logged on and registers identification details of the communicator 66 taken by the server. This data is stored on the controller 52, which flags the database to indicate that the server has logged on, and records the identification data of the communicator 66 associated with the server. This process is repeated as each server logs on to the system.

A customer entering the retail store may choose to browse through the products on display. In this case, they will not normally be approached by the servers, who are trained to respond only to specific service requests.

Alternatively, the customer may use one of the customer service points 60 to obtain further information about specific products, or to request assistance from a server. If the customer only requires additional product information, this is transmitted to the customer service point 60 from the controller 52 and displayed on the screen 70 in response to the customer's queries.

If the customer requires assistance from a server, this can also be requested using a customer service point 60, Upon receiving a request for assistance, the system sends a message to the customer service point 60 asking the customer to indicate the product or product group in which the customer is interested) and type of assistance required (for example basic information or advice about the product, a full product demonstration, or a purchase). The customer enters this information using the customer service point 60 and the controller 52 then uses that information to select the server who is best suited for responding to the service request. Suitability may depend on various factors including the server's knowledge of the product, the nature of the service request, the sales conversion rate of the server and so on. The process for selecting a server is described in more detail below.

Once the most suitable server has been selected, the system sends a message to the selected server via the server's communicator 66, indicating details of the service request. Those details may include an identification of the product, the nature of the service request (i.e. the service grade), identification of the customer service point from which the request was made, and so on. The server can either accept or decline the service request by sending an appropriate message back to the controller 52 from the communicator 66. If the server accepts the service request, the controller 52 sends a message to the customer via the customer service point 60, which prints a ticket to confirm that the request has been accepted. The ticket may also contain other useful information, such as the name of the selected server. The server then goes to the identified customer service point 60 to meet the customer and deal with the request. Upon completion of a transaction, the customer can use a terminal 6 to indicate his or her level of satisfaction with the service received. This data is stored by the system controller computer 52 in the database.

If the server declines the request, the controller 52 passes the request to the next most suitable server, and so on until the request is accepted. If no suitable server is available, the controller may send a message to the customer via the customer service point 60, indicating an estimated wait time. The customer may then choose either to wait or to cancel the service request. If the customer indicates a willingness to wait, this is noted by the controller 52, which transmits the service request to the next suitable server who becomes available. The controller 52 may also send a message to the supervisor via the supervisor control computer 58, so that the supervisor can take appropriate action. This may include adjusting the parameters of the customer service system to ensure that service requests are dealt with more quickly, or making more servers available,

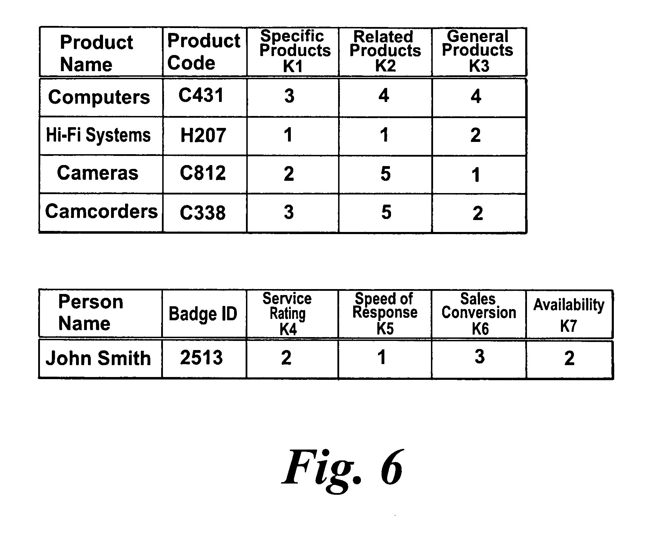

The process for selecting servers on the basis of their suitability for handling specific service requests will now be described with reference to Figures 6 to 11.

Each server is assessed and categorised for their availability, knowledge and skill according to a set of selection categories. This data is stored in the controller 52 in the form of a two dimensional table of selection values for each individual server. The categories that are assessed correspond to the availability of the server and areas of knowledge and skill that are expected to contribute to the overall service provision and customer experience.

The selection categories may for example be as follows:

$K_1$    specific product knowledge

$K_2$    related products knowledge

$K_3$    general product knowledge

$K_4$    service rating

$K_5$    speed of response

$K_6$    sales conversion rate

$K_7$    availability

The seven selection categories are divided into two groups. The first three selection categories $K_1$ to $K_3$ all relate to the individual server's knowledge of particular products and product groups. For example, if the product group is cameras, the first category $K_1$ may relate to specific product knowledge, such as knowledge of digital cameras. The second selection category $K_2$ may concern knowledge of related products, for example photo printers, computers and photo imaging software, The third category $K_3$ may be concerned with general product knowledge, including for example knowledge of associated products and services such as photo printing services, repair and maintenance services, and extended warranties.

The other selection categories $K_4$ to $K_7$ all relate to the server's skill levels and other attributes in a number of areas that are not product related, but are specific to that server. Thus, in the example, the $K_4$ selection category is a service rating, which is a measure of customer satisfaction. $K_5$ measures average speed of response to customer service requests, and $K_6$ is a measure of the sales conversion rate, i.e. the proportion of service requests that result in a sale. Alternatively, it may be a measure of added value, for additional goods and services sold to the customer.

$K_7$ is a measure of the server's availability. The availability rating may be determined in various different ways. For example, it may be used as a measure of the server's enthusiasm and willingness to serve. Thus, a server who is always keen to serve will be given a high availability rating, whereas a server who is less enthusiastic and perhaps takes numerous unauthorised breaks while on duty will be given a lower rating. The enthusiastic server will then be more likely to receive a service request and so will benefit accordingly from any company incentive scheme.

Alternatively, the availability rating may be constantly updated, according to the task with which the server is engaged. Thus, the availability rating may be high if a server is available and unoccupied and therefore ready to serve a customer, or it may be low if the server is engaged on another task, for example checking stock or training staff, but is still available to serve customers if the need arises.

The selection categories for each server are stored in a database held on the controller 52. For each server, two sets of data are stored, as illustrated in Figure 6. The first set contains the server's selection values $K_1$ to $K_3$ for different product ranges, while the second set contains the server's personal skill and availability values, for categories $K_4$ to $K_7$. These values may be updated from time-to-time as the server's skill levels and knowledge change.

The value range for each selection value is dependent on the implementation of the customer service system. In this example, a range of 0 to 5 is used. It is preferable that each K value has the same range.

In the example, the server John Smith, has a level 3 specific product knowledge value for computers and camcorders, which indicates that he is capable of providing at least basic information about each of those product groups. The level 2 value for cameras suggests that he has a lower level of knowledge in relation to those goods, but is still probably able to provide basic advice. His specific product knowledge value of 1 for hi-fi systems indicates that he has little knowledge of those products and is therefore unable to handle any but the most basic of service requests (for example checking stock levels or taking an order for the product).

For each store, the products are classified into a manageable number of product groups having unique identifiers, for example as indicated by the product codes in Figure 6. Each server also has a unique identifier, for example a badge ID.

When a customer registers a service request, this will include an indication both of the product group in which the customer is interested (for example computers, hi-fi systems, cameras or camcorders) and an indication of the service grade required. The service grade indicates the type of service required, such as a demonstration of the product, further information about the product or simply purchase of the product. Both of these pieces of information are used by the customer service system when selecting a server who is suitable for responding to the service request.

The product information determines which set of product knowledge values is relevant for each server, In the example illustrated in Figure 6, if the customer is interested in cameras (product code C812) the product knowledge values $K_1$ to $K_3$ for John Smith would be 2, 5 and 1 respectively. The other selection values $K_4$ to $K_7$ do not depend on the selected product and in the example for John Smith will be 2, 1, 3 and 2 respectively.

The service grade input indicates the kind of assistance requested by the customer and this information is used to determine a set of weighting values that influence the relative importance of the various selection values for each server.

For example, in a retail store, there may be three selectable service grades as follows:

A    buy a particular item;

B    see a specific product demonstration; and

C    obtain product information.

Other measures of complexity could be used, such as the quantity of items involved or the effort involved in serving the customer, if that is more appropriate to the retailer.

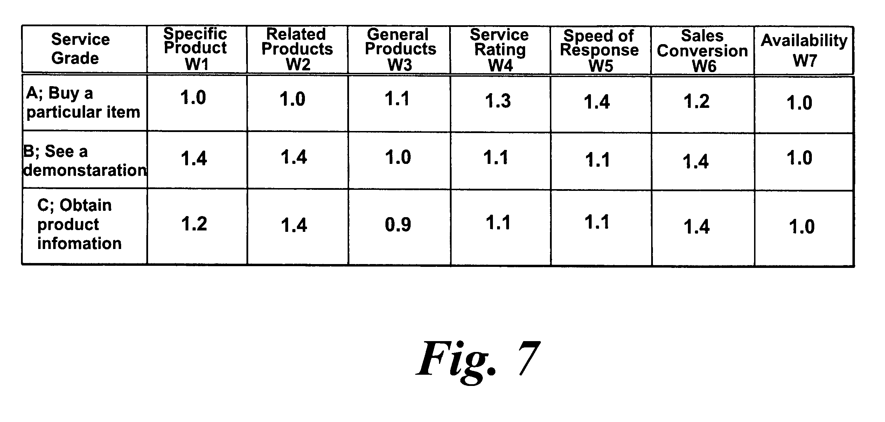

For each of these service grades, the different selection categories are rated as more or less important in contributing towards the best overall service. This is reflected in a table of weighting values having one row for each service grade, as shown in Figure 7. These weighting values give a measure $W_1$ of how much each selection category is considered to contribute to the provision of each type of service grade. The weighting values that are selected depend on the environment and an assessment made by the management, and so depend on the situation in which the customer service system is situated.

A neutral value of 1.0 is set as the starting point for the weighting values. If all the weighting values are set to 1.0 then all selection values will have an equal importance and will contribute equally to the service provision. As understanding of the retail environment is gained, the weighting value can be adjusted to reflect the policy and judgement of the supervising management.

The weighting values for a selected service grade are applied by multiplying them with the selection values in the corresponding selection categories for the selected product or product group. This gives a weighted selection value in each selection category.

The weighted selection value $WK_i$ in each selection category i can be represented as

$$WK_i = W_i \times K_i$$

where $W_i$ is the weighting value and $K_i$ is the selection value in the category i.

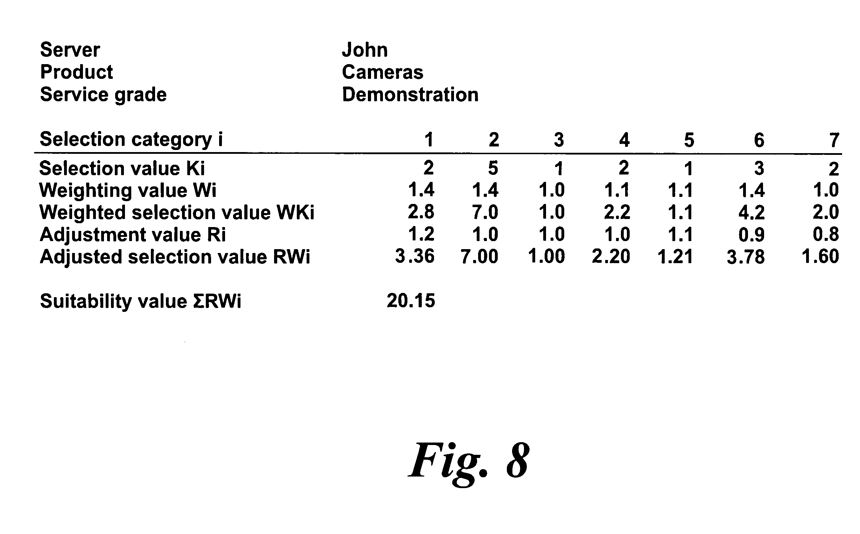

Figure 8 illustrates an example in which the server is John Smith, the product group is cameras and the service grade is demonstration. In each selection category i, the weighted selection value $WK_i$ is equal to the selection value $K_i$ multiplied by the weighting value $W_i$.

Optionally, the weighted selection values may be subjected to a further adjustment process. This may be useful for example where a retail company has a number of stores in different geographical locations or trading in different circumstances and there is a need to adjust the weighted selection values for each store according to its particular circumstances. In the adjustment process a set of adjustment values is applied by multiplying the adjustment values with the weighted selection values in each of the selection categories. The adjusted selection values $RW_i$ can then be obtained by applying the expression $RW_i = R_i \times WK_i$ for each of the selection categories i.

The adjustment process is illustrated in the last two lines of the previous table (Figure 8). It can be seen that for each selection category i the adjusted selection value $RW_i$ is equal to the weighted selection value $WK_i$ multiplied by the ranking value $R_i$.

Finally, a suitability value for the server is obtained by summing the adjusted selection values. The suitability value Sp for the server P is thus obtained from the expression

$$S_p = \sum RW_i \text{ for } i = 1 \text{ to } 7.$$

Alternatively, if the optional adjustment process is omitted, the suitability value for the server is obtained by summing the weighted selection values, The suitability value $S_p$ for the server P is then obtained from the expression $S_p = \sum Wk_i$ for i =1 to 7.

This process is carried out for all of the servers who are logged in to the system. The suitability values are then placed in numerical order, the server with the highest suitability value being deemed the most suitable to deal with the service request, while the server with the lowest suitability value is deemed the least suitable.

If two or more servers have an identical suitability value, a further tie-break process may be applied to separate them. This may for example be decided on the basis of the server who has served the fewest customers in the current session, or the server who has waited longest since last serving a customer. If neither of these processes reduces the choice to a single server, one of the remaining servers may be picked at random using a pseudo random number generator, so that each server in the ratings match will have an equal likelihood of being chosen.

Once the suitability ranking of the servers has been established, the server ranked first is sent a message via the communicator, offering him or her an opportunity to respond to the service request. If the server declines the service request, it is passed to the server who was ranked next most suitable. This will continue until a suitable available server accepts the service request. The system may however include a cut-off process, which prevents the service request being offered to servers whose suitability value falls below a predetermined threshold.

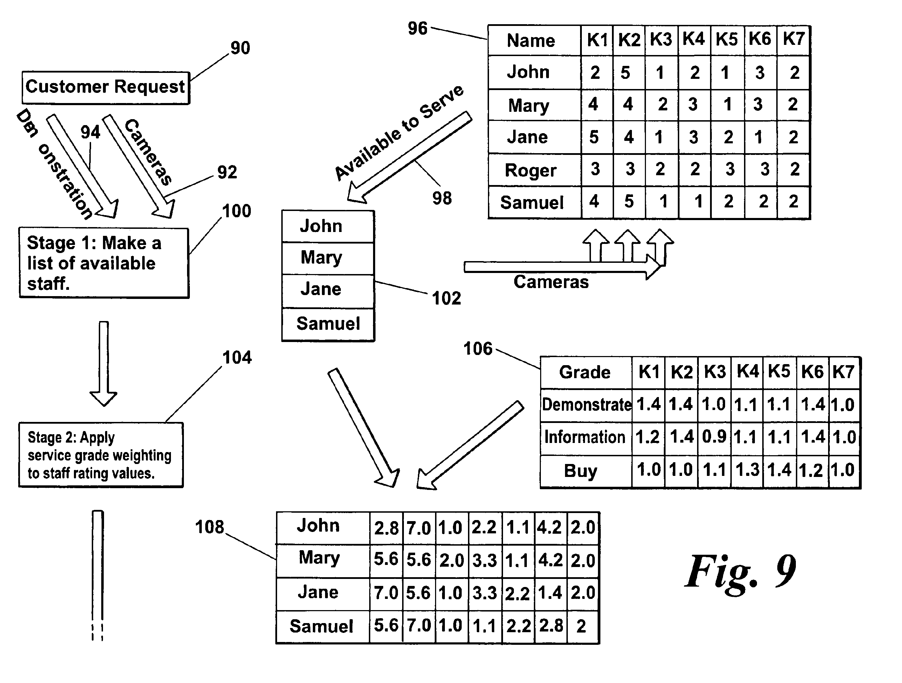

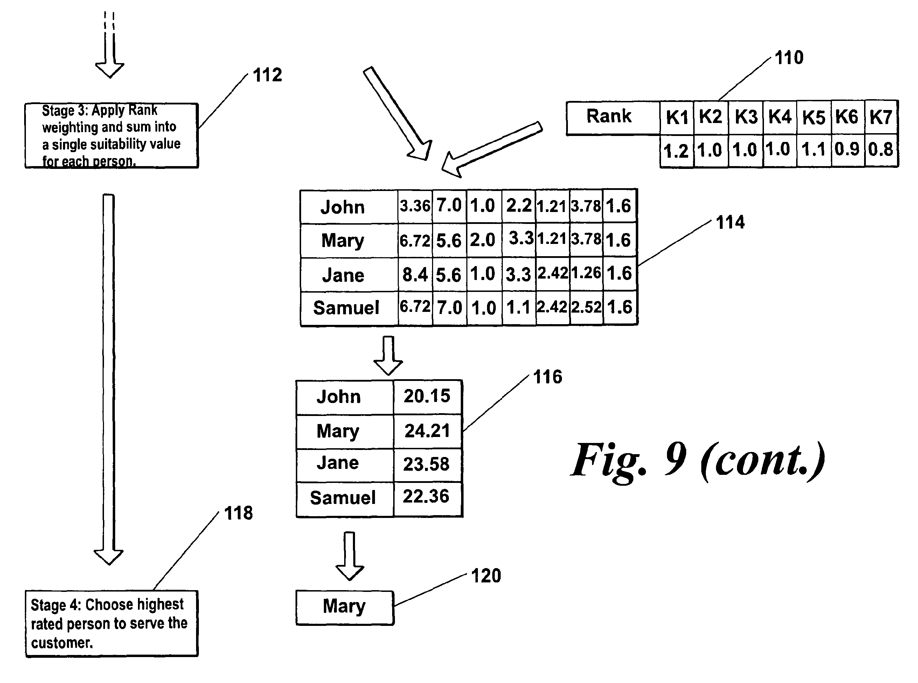

An example illustrating operation of the server selection process is shown in Figure 9. In the first step of the process the system receives a service request 90 that includes product data 92 (for example **cameras**) and service grade data 94 (for example a request for a **demonstration**)

The controller 52 includes a database that contains selection value data for all of the servers (e.g. **John, Mary, Jane, Roger** and **Samuel**) in each of the product groups. The controller 52 extracts from that database the selection values for the specified product group (**cameras**) and assembles those values into a table 96.

The system then checks 98 which servers have logged in to the system and are available to serve, and compiles 100 a list 102 of those servers. In the example, the server Roger has not logged in and the list of available servers 102 therefore consists only of **John, Mary, Jane** and **Samuel**.

In the next step 104, the system uses the requested service grade 94 to extract the appropriate service grade weighting values from the table of weighting values 106. In the example, the service grade is a request for a product demonstration and the service grade values are therefore 1,4, 1,4, 1.0, 1.1, 1.1, 1.4 and 1.0. The extracted service grade values are then applied to the selection values for each of the servers, producing a set of weighted selection values 108.

If required, the optional adjustment values 110 are applied 112 to the weighted selection values, producing a set of adjusted selection values 114. The suitability value for each server is then extracted by summing the adjusted selection values. This produces a suitability value 116 for each of the servers. Finally, the suitability values are placed in numerical order 118 and the server 120 with the highest suitability value is chosen and requested to respond to the service request.

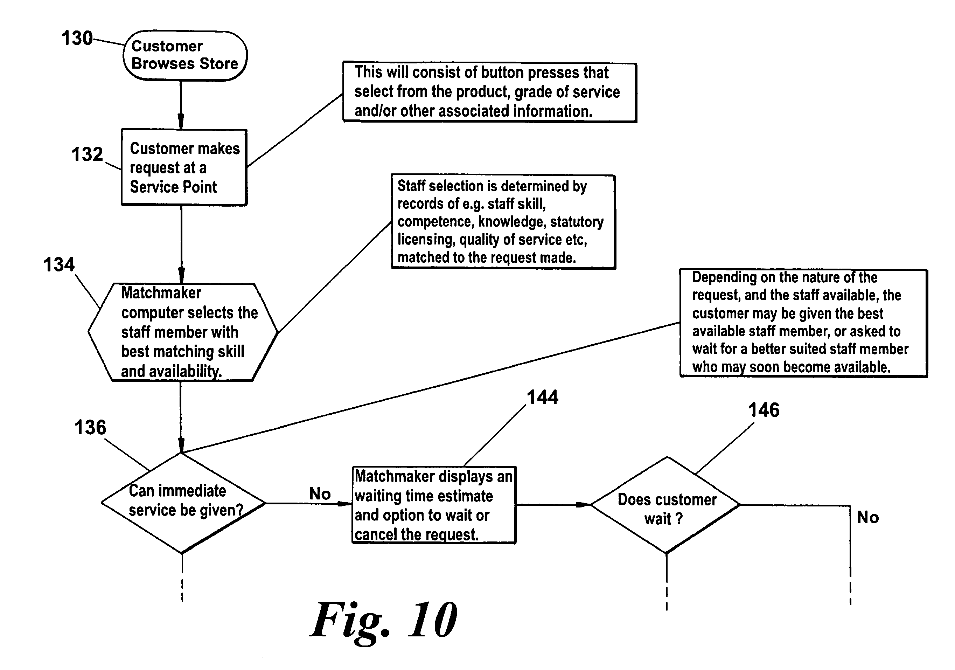

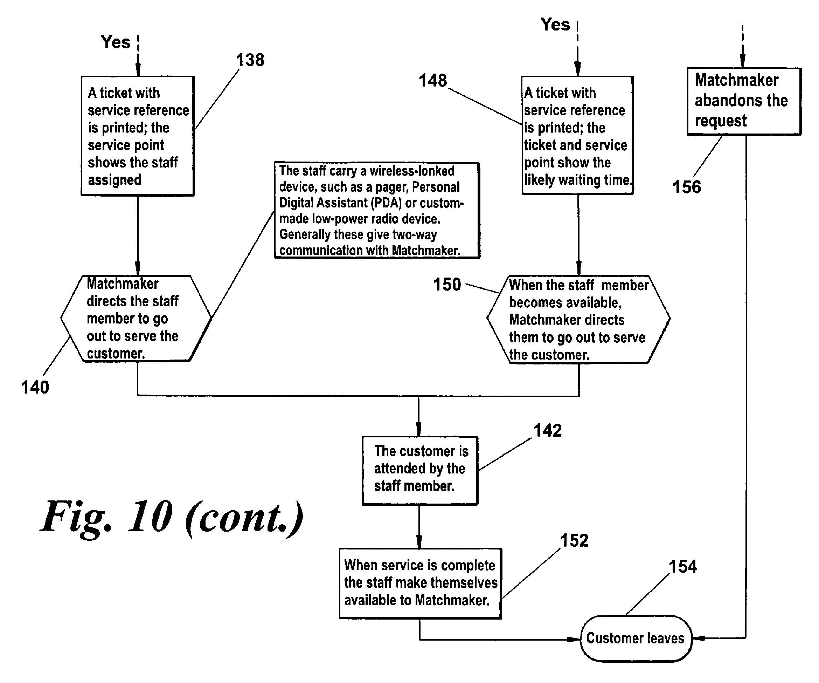

Operation of the customer service system is illustrated in more detail in Figure 10. Initially 130, a customer enters the store and browses through the available products. When the customer requires assistance, he or she makes a service request 132 at one of the service points within the store. The service request is entered by pressing buttons on the service point to select from menus of available options, and includes product and service grade data and/or other associated information. The service request is transmitted to the controller computer, which logs details of the service request and implements the server matching process 134 to identify a suitable server. Subsequent operation depends on whether a suitable server is available 136.

If a suitable server is available and accepts the service request, a ticket is printed at the service point with a service reference. The name of the server assigned to serve the customer is displayed on the service point 138. The name of the server may also be printed on the ticket. The allocated server is then directed to the customer 140 and the customer is attended by the server 142.

If no suitable server is available, or if no server accepts the service request, the controller calculates an estimated waiting time based for example on the number of servers logged in to the system, the number of waiting customers and the average service time. The estimated wait time is displayed on the service point 144 and the customer is offered the choice of either waiting to be served, or cancelling the service request. The customer indicates his or her choice by pressing buttons on the service point 146.

If the customer decides to wait, a ticket is printed at the service point with a service reference and the estimated waiting time. The waiting time may also be displayed on the service point 148. When a suitable server becomes available details of the queued service request are immediately transmitted to the server and if the service request is accepted, the server is directed to the customer 150 and attends to the customers requirements 142.

When service is complete 152 the server sends a signal to the controller to indicate that he/she is again available to server 152 and the customer leaves 154. Alternatively, if the customer decides not to wait 146, the service request is cancelled 156 and the customer leaves 104.

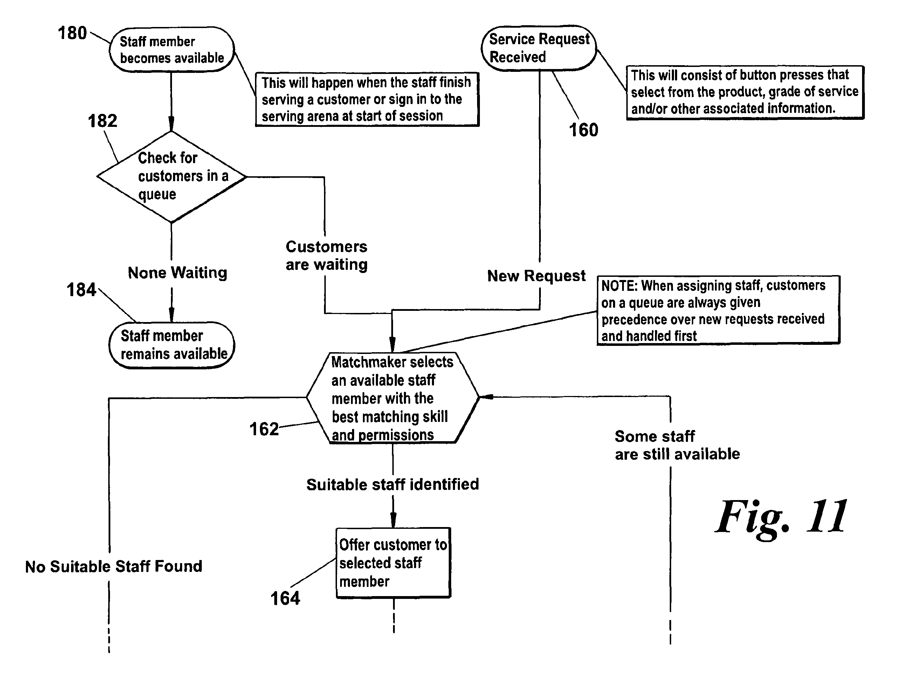

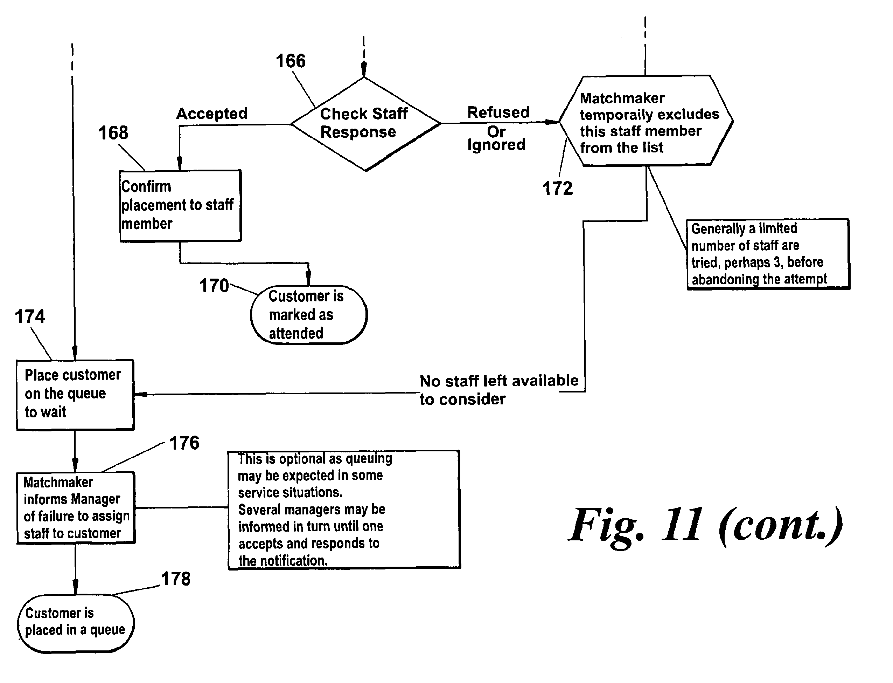

The way in which the system handles queuing customers is illustrated in Figure 11.

When a service request is received 160, the system attempts 162 to match the customer with an available server having the highest suitability rating for the specific service request. When the most suitable server has been identified the service request is offered 164 to the selected server. The system then waits 166 for a response from the server. If the service request is accepted, the server is directed 168 to the customer and the customer is marked 170 as attended.

If the service request is refused or if no response is received from the server within a predetermined timeout period, the selected server is temporarily removed 172 from the list of available servers. If one or more servers remain available, the system then repeats its attempt 162 to match the customer with the remaining servers. This process 162, 164, 166, 170 may be repeated until no servers are left, or for a limited number of attempts (for example three attempts) before the system abandons its attempt to match a server to the customer, The customer is then placed 174 in a queue to wait for a suitable server.

If, while attempting 162 to match a server to the customer, it is found that the suitability rating of all available servers falls below a predetermined threshold, indicating that no suitable servers are available, the customer is again placed in the queue 174.

Optionally, the system may inform 176 a manager or supervisor of a failure to assign a server to the customer, so that the manager/supervisor can take appropriate action. This will not always be required, as in some situations queuing might be expected. Alternatively, a message may be triggered only if the number of queuing customers for the estimated waiting time exceeds a predetermined threshold. In the meantime, the customer is held 178 in the queue.

As soon as a server becomes available 180 (for example when a server finishes serving a customer or when a new server logs in), the system immediately checks 182 for customers waiting in the queue. If no customers are waiting, the system then waits for a service request and the server remains available 184. If there is a customer in the queue, the system attempts 162 to match the customer with the available server or servers. If a suitable server is available, the service request is offered to the server.

If no suitable server is available, the first customer will remain in the queue. If there is another customer in the queue, the system may then attempt to match that customer with an available server and if a suitable server is available, it will offer the customer to the server. Meanwhile, the first customer will remain in the queue until a suitable server becomes available. This process may be repeated with other customers waiting in the queue.

Whenever there are customers in the queue, their service requests will take priority over service requests received from new customers. The system will therefore always attempt to match a server with queuing customers before attempting a match with new customers.

When there is more than one customer in the queue, these may be prioritised either chronologically (so that the system attempts to find a match with the customer who has been queuing longest, before attempting a match with any other customers), or according to some other criteria. For example, a customer who simply wishes to purchase a product (as indicated by their service request) may take priority over another customer who requires a full product demonstration. The way in which queuing customers are prioritised can be configured according to the requirements of the retailer.

Although the customer service system is described above mainly in relation to its use in a retail environment, the system may also be used in other customer service environments, For example, the system may be used in a bank, for arranging meetings between customers and bank staff with suitable levels of skill and knowledge to deal with the customer's requirements.

In a banking situation, the "products" may consist of a wide range of products or services including, for example, loans and mortgages, current accounts, savings, share dealing, credit and debit cards, banking for children or youths, business banking and so on. The "service grades" may include, for example, taking specific action (such as opening an account, buying or selling shares etc), or providing general information about products and services.

The selection categories may also be varied from those described above, for example $K_1$ may relate to the server's knowledge of specific financial products and services, whereas $K_2$ may relate to the server's knowledge of related products and services. Optionally, the $K_3$ selection category may be used as an overriding pexmit/deny filter, to prevent unqualified servers from responding to certain specific service requests. This may be necessary for example where financial regulations require financial advice in relation to specific financial products and services to be provided only by suitably qualified staff.

The remaining selection categories $K_4$ to $K_7$ will generally relate to personal skill and availability values, as in the previous example.

Operation of the customer service systems in a banking system will generally be similar to that described above. However, instead of having numerous customer service points that can be operated by the customers, it is more likely that there will be single customer service point, operated by a customer service representative. The customer service representative will greet bank customers on arrival and enter service requests on the customers' behalf, according to their requirements. If a server is not immediately available to respond to the service request, the customer will be invited to wait in a designated waiting area, after having been issued with a ticket carrying a service reference,

If the $K_3$ selection category is used as an absolute allow/deny filter, the server selection process will be modified slightly to include an additional step in which the $K_3$ selection category of each server is examined and any servers that are not permitted to provide the specified advice are removed from the list of available servers. Server selection will then continue only with the remaining servers, who have the required qualifications.

If a suitable server is not immediately available and the customer does not wish to wait for a server to become available, the system may also offer the option of arranging an appointment to see a specified server at some future date.

In certain circumstances, a simpler customer service system than those described above may be adequate. For example, the system may be designed to receive a service request that contains no product or service grade data (only the fact that services requested being recorded), to select a server on the basis of suitability, where suitability depends only on the server's customer satisfaction level, and to transmit the service request to the server. This system may be suitable in very simple situations, where all the servers are equally qualified to handle service requests. Optionally, one or more of the other selection values may also be taken into account.

At a slightly more sophisticated level, for example in a shoe shop where no specialist technical knowledge of the products is generally required, the service request may include service grade data to indicate, for example, whether or not a qualified fitter is required. The system may therefore be tailored to the particular circumstances in which it is to be used.

**Claims**

1. A method for assessing customer service satisfaction comprising creating a display that includes a graphical representation of the identity of a server and a graphical representation of levels of performance satisfaction, receiving user input that indicates one of the levels of performance satisfaction, and recording the indicated level of performance satisfaction and the identity of the server in a database.

2. A method according to claim 1 in which the graphical representation of the identity of a server includes a photographic representation of the server.

3. A method according to claim 1 or claim 2 in which the graphical representation of the identity of a server includes a textual representation of the server's name.

4. A method according to any preceding claim in which the graphical representation of levels of customer satisfaction includes figurative icons.

5. A method according to any preceding claim in which the graphical representation of levels of customer satisfaction includes a textual description.

6. A method according to any preceding claim in which an identifier of a server is used to retrieve data relating to the server from a database.

**7.** A method according to claim 6 in which the data relating to the server includes a photograph of the server.

**8.** A method according to claim 6 or claim 7 in which the identifier of a server is derived from data that identifies a transaction.

**9.** A method according to any preceding claim, in which the level of performance satisfaction recorded in the database is used to determine a suitability value for the server, which may be used to assess the suitability of the server for responding to future service requests.

**10.** A method according to claim 9, including receiving a service request from a customer, retrieving from the database a suitability value for each of a plurality of servers, and selecting a server on the basis of the obtained suitability values.

**11.** A terminal for recording feedback relating to customer service satisfaction comprising a display and an input device, the terminal being operative to display a graphical representation of the identity of a server and a graphical representation of levels of customer satisfaction with the service provided by the server, and to receive through the input device an indication of the customer's satisfaction with the service and to record the customer's input in a database.

**12.** A terminal according to claim 11 in which the graphical representation of the identity of a server includes a photographic representation of the server,

**13.** A terminal according to claim 11 or claim 12 in which the graphical representation of the identity of a server includes a textual representation of the server's name.

**14.** A terminal according to any one of claims 11 to 13 in which the graphical representation of levels of customer satisfaction includes figurative icons.

**15.** A terminal according to any one of claims 11 to 14 in which the graphical representation of levels of customer satisfaction includes a textual description.

**16.** A terminal according to any one of claims 11 to 15 in which the input device includes one or more pushbuttons,

**17.** A terminal according to any one of claims 11 to 16 in which the input device includes a touch screen.

**18.** A terminal according to any one of claims 11 to 17 further operative to transfer data received from a customer to a database.

**19.** A terminal according to any one of claims 11 to 18 further operative to receive an identifier of a server, and retrieve data relating to the server from a database.

**20.** A terminal according to claim 19 in which the retrieved data includes a photograph of the server.

**21.** A terminal according to claim 19 or claim 20 in which the identifier of a server is derived from data that identifies a transaction.

**22.** A terminal according to any one of claims 11 to 21 that is constituted by a suitably programmed point-of-sale terminal,

**23.** A customer service system including a terminal according to any one of claims 11 to 22, a database for recording data relating to one or more servers, said data including the indicated levels of customer satisfaction, and a controller for controlling the transfer of data to and from the terminal and the database.

**24.** A customer service system according to claim 23, in which the controller is constructed and arranged to determine from the indicated levels of customer satisfaction a suitability value for each server, which may be used to assess the suitability of the server for responding to future service requests, and to record the suitability values in the database.

**25.** A customer service system according to claim 24, including means for receiving a service request, the controller being constructed and arranged such that upon receiving a service request the controller retrieves from the database a suitability value for each server and selects a server for responding to the service request on the basis of the suitability values.

**26.** A customer service system according to claim 25, including a communications system that allows the controller to communicate with the servers.

*Fig. 1*

Staff skill record — 18

Service period based on staff skill rating — 20

Customer moves to a till with a terminal embodying the invention — 22

Staff enters service reference from ticket or staff ID into a keypad of the terminal — 24

Server name and photo retrieved from the database — 26

*Fig. 2*

Terminal shows picture and
name of server and service
satisfaction icons

28

Customer makes choice
of satisfaction level for
the service

30

Customer leaves the
store

32

Satisfaction level stored
in the terminal

34

Daily satisfaction
level record

36

Staff service quality rating
in the database updated
based on daily satisfaction
level record

38

*Fig. 2 (cont.)*

*Fig. 3*

**Fig. 4**

**Fig. 5**

| Product Name | Product Code | Specific Products K1 | Related Products K2 | General Products K3 |
|---|---|---|---|---|
| Computers | C431 | 3 | 4 | 4 |
| Hi-Fi Systems | H207 | 1 | 1 | 2 |
| Cameras | C812 | 2 | 5 | 1 |
| Camcorders | C338 | 3 | 5 | 2 |

| Person Name | Badge ID | Service Rating K4 | Speed of Response K5 | Sales Conversion K6 | Availability K7 |
|---|---|---|---|---|---|
| John Smith | 2513 | 2 | 1 | 3 | 2 |

*Fig. 6*

| Service Grade | Specific Product W1 | Related Products W2 | General Products W3 | Service Rating W4 | Speed of Response W5 | Sales Conversion W6 | Availability W7 |
|---|---|---|---|---|---|---|---|
| A; Buy a particular item | 1.0 | 1.0 | 1.1 | 1.3 | 1.4 | 1.2 | 1.0 |
| B; See a demonstaration | 1.4 | 1.4 | 1.0 | 1.1 | 1.1 | 1.4 | 1.0 |
| C; Obtain product infomation | 1.2 | 1.4 | 0.9 | 1.1 | 1.1 | 1.4 | 1.0 |

*Fig. 7*

Server          John
Product       Cameras
Service grade  Demonstration

| Selection category i | 1 | 2 | 3 | 4 | 5 | 6 | 7 |
|---|---|---|---|---|---|---|---|
| Selection value Ki | 2 | 5 | 1 | 2 | 1 | 3 | 2 |
| Weighting value Wi | 1.4 | 1.4 | 1.0 | 1.1 | 1.1 | 1.4 | 1.0 |
| Weighted selection value WKi | 2.8 | 7.0 | 1.0 | 2.2 | 1.1 | 4.2 | 2.0 |
| Adjustment value Ri | 1.2 | 1.0 | 1.0 | 1.0 | 1.1 | 0.9 | 0.8 |
| Adjusted selection value RWi | 3.36 | 7.00 | 1.00 | 2.20 | 1.21 | 3.78 | 1.60 |

Suitability value ΣRWi     20.15

# Fig. 8

EP 1 845 486 A1

90 Customer Request

Demonstration 94 Cameras 92

Stage 1: Make a list of available staff. 100

Available to Serve 98

| Name | K1 | K2 | K3 | K4 | K5 | K6 | K7 |
|------|----|----|----|----|----|----|----|
| John | 2 | 5 | 1 | 2 | 1 | 3 | 2 |
| Mary | 4 | 4 | 2 | 3 | 1 | 3 | 2 |
| Jane | 5 | 4 | 1 | 3 | 2 | 1 | 2 |
| Roger | 3 | 3 | 2 | 2 | 3 | 3 | 2 |
| Samuel | 4 | 5 | 1 | 1 | 2 | 2 | 2 |

96

| John |
|------|
| Mary |
| Jane |
| Samuel |

102

Cameras

Stage 2: Apply service grade weighting to staff rating values. 104

| Grade | K1 | K2 | K3 | K4 | K5 | K6 | K7 |
|-------|----|----|----|----|----|----|----|
| Demonstrate | 1.4 | 1.4 | 1.0 | 1.1 | 1.1 | 1.4 | 1.0 |
| Information | 1.2 | 1.4 | 0.9 | 1.1 | 1.1 | 1.4 | 1.0 |
| Buy | 1.0 | 1.0 | 1.1 | 1.3 | 1.4 | 1.2 | 1.0 |

106

| John | 2.8 | 7.0 | 1.0 | 2.2 | 1.1 | 4.2 | 2.0 |
|------|-----|-----|-----|-----|-----|-----|-----|
| Mary | 5.6 | 5.6 | 2.0 | 3.3 | 1.1 | 4.2 | 2.0 |
| Jane | 7.0 | 5.6 | 1.0 | 3.3 | 2.2 | 1.4 | 2.0 |
| Samuel | 5.6 | 7.0 | 1.0 | 1.1 | 2.2 | 2.8 | 2 |

108

Fig. 9

EP 1 845 486 A1

**Stage 3: Apply Rank weighting and sum into a single suitability value for each person.** — 112

**Stage 4: Choose highest rated person to serve the customer.** — 118

110

| Rank | K1 | K2 | K3 | K4 | K5 | K6 | K7 |
|------|-----|-----|-----|-----|-----|-----|-----|
|      | 1.2 | 1.0 | 1.0 | 1.0 | 1.1 | 0.9 | 0.8 |

114

| John   | 3.36 | 7.0 | 1.0 | 2.2 | 1.21 | 3.78 | 1.6 |
|--------|------|-----|-----|-----|------|------|-----|
| Mary   | 6.72 | 5.6 | 2.0 | 3.3 | 1.21 | 3.78 | 1.6 |
| Jane   | 8.4  | 5.6 | 1.0 | 3.3 | 2.42 | 1.26 | 1.6 |
| Samuel | 6.72 | 7.0 | 1.0 | 1.1 | 2.42 | 2.52 | 1.6 |

116

| John   | 20.15 |
|--------|-------|
| Mary   | 24.21 |
| Jane   | 23.58 |
| Samuel | 22.36 |

*Fig. 9 (cont.)*

Mary — 120

EP 1 845 486 A1

**130** — Customer Browses Store

This will consist of button presses that select from the product, grade of service and/or other associated information.

**132** — Customer makes request at a Service Point

Staff selection is determined by records of e.g. staff skill, competence, knowledge, statutory licensing, quality of service etc, matched to the request made.

**134** — Matchmaker computer selects the staff member with best matching skill and availability.

Depending on the nature of the request, and the staff available, the customer may be given the best available staff member, or asked to wait for a better suited staff member who may soon become available.

**136** — Can immediate service be given?

No → **144** Matchmaker displays an waiting time estimate and option to wait or cancel the request.

**146** — Does customer wait? → No

*Fig. 10*

**Yes**

**138**

A ticket with service reference is printed; the service point shows the staff assigned

**Yes**

**148**

A ticket with service reference is printed; the ticket and service point show the likely waiting time.

Matchmaker abandons the request

**156**

The staff carry a wireless-lonked device, such as a pager, Personal Digital Assistant (PDA) or custom-made low-power radio device. Generally these give two-way communication with Matchmaker.

Matchmaker directs the staff member to go out to serve the customer.

**140**

**150**

When the staff member becomes available, Matchmaker directs them to go out to serve the customer.

*Fig. 10 (cont.)*

**142**

The customer is attended by the staff member.

**152**

When service is complete the staff make themselves available to Matchmaker.

**154**

Customer leaves

EP 1 845 486 A1

EP 1 845 486 A1

180 — Staff member becomes available

This will happen when the staff finish serving a customer or sign in to the serving arena at start of session

Service Request Received

This will consist of button presses that select from the product, grade of service and/or other associated information.

182

Check for customers in a queue

160

None Waiting

Customers are waiting

New Request

NOTE: When assigning staff, customers on a queue are always given precedence over new requests received and handled first

184

Staff member remains available

Matchmaker selects an available staff member with the best matching skill and permissions

162

Some staff are still available

Suitable staff identified

No Suitable Staff Found

Offer customer to selected staff member

164

*Fig. 11*

**166**

**168**

Accepted — **Check Staff Response** — Refused Or Ignored → **Matchmaker temporaily excludes this staff member from the list**

Confirm placement to staff member

**172**

Generally a limited number of staff are tried, perhaps 3, before abandoning the attempt

**170** — Customer is marked as attended

**174**

Place customer on the queue to wait ← No staff left available to consider

**176**

Matchmaker informs Manager of failure to assign staff to customer

This is optional as queuing may be expected in some service situations. Several managers may be informed in turn until one accepts and responds to the notification.

**178**

Customer is placed in a queue

*Fig. 11 (cont.)*

**European Patent Office**

**EUROPEAN SEARCH REPORT**

Application Number

EP 07 00 6217

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/078209 A1 (THOMSON RODNEY A [US]) 22 April 2004 (2004-04-22) <br> * abstract * <br> * page 1, paragraphs 5,7,9 * <br> * page 2, paragraphs 16,18,19 * <br> * page 3, paragraphs 26,29 * <br> * page 4, paragraph 30 * <br> * page 5, paragraphs 39-41,43 * <br> * page 6, paragraph 49 - paragraph 50 * <br> ----- | 1-32 | INV. <br> G06Q10/00 <br> G06Q30/00 |
| X | WO 2005/103970 A (QM GROUP LTD [GB]; CHRISTIE MARTIN STUART [GB]) 3 November 2005 (2005-11-03) <br> * abstract * <br> * page 3, line 8 - line 25 * <br> * page 4, line 10 - line 27 * <br> * page 5, line 19 - page 6, line 28 * <br> * page 7, line 1 - page 8, line 24 * <br> * claim 1 * <br> ----- | 1-32 | |
| X | WO 01/40959 A (LIGHTNING ROD SOFTWARE INC [US]) 7 June 2001 (2001-06-07) <br> * abstract * <br> * page 5, line 4 - line 14 * <br> * page 9 - page 11; tables 1,2 * <br> * page 12, line 8 - page 14, line 13 * <br> ----- | 1-32 | TECHNICAL FIELDS SEARCHED (IPC) <br><br> G06Q |

The present search report has been drawn up for all claims

| Place of search | Date of completion of the search | Examiner |
|---|---|---|
| The Hague | 30 May 2007 | Rossier, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 00 6217

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2007

| Patent document cited in search report | | Publication date | Patent family member(s) | | Publication date |
|---|---|---|---|---|---|
| US 2004078209 | A1 | 22-04-2004 | NONE | | |
| WO 2005103970 | A | 03-11-2005 | EP | 1738317 A1 | 03-01-2007 |
| WO 0140959 | A | 07-06-2001 | AU | 2426501 A | 12-06-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 05103970 A